**Europäisches Patentamt**

**European Patent Office**

**Office européen des brevets**

(19)

(11) Veröffentlichungsnummer: **0 175 953**

**A2**

(12) # EUROPÄISCHE PATENTANMELDUNG

(21) Anmeldenummer: **85110860.5**

(22) Anmeldetag: **29.08.85**

(51) Int. Cl.⁴: **F 16 C 33/78**

(30) Priorität: **27.09.84 DE 3435437**

(43) Veröffentlichungstag der Anmeldung:
**02.04.86 Patentblatt 86/14**

(84) Benannte Vertragsstaaten:
**DE FR GB IT**

(71) Anmelder: **INA Wälzlager Schaeffler KG**
**Industriestrasse 1-3**
**D-8522 Herzogenaurach(DE)**

(72) Erfinder: **Kaiser, Theodor, Dipl.-Ing.**
**Peter-Vischer-Strasse 60b**
**D-8552 Höchstadt(DE)**

(54) **Elastische Dichtung für eine Wälzlager-Drehverbindung.**

(57) Um eine Wälzlager-Drehverbindung zuverlässig vor dem Eindringen von Fremdstoffen, insbesondere von Feuchtigkeit zu schützen, welche Drehverbindung aus zwei Laufringen (1, 2) und zwischen diesen abrollenden Wälzkörpern (3) besteht, wobei der eine Laufring (2) den anderen Laufring (1) in axialer Richtung überragt, zwischen beiden Laufringen (1, 2) ein ringförmiger Spalt (4) besteht, der eine Laufring (2) in seiner den anderen Laufring (1) überragenden und ihm zugewandten Mantelfläche eine umlaufende Nut (5) aufweist, in die eine elastische Dichtung (6) eingesetzt ist, welche eine Dichtlippe (7) aufweist, die gleitend an dem anderen Laufring (1) anliegt, sieht die Erfindung vor, daß die Dichtung (6) einen in den ringförmigen Spalt (4) eingreifenden, axial gerichteten Kragen (8) aufweist, der sich am einen Laufring (2) abstützt und mit wenigstens einer Dichtlippe (9) innerhalb des Spaltraumes (4) gleitend an dem anderen Laufring (1) anliegt.

./...

FIG.1

INA Wälzlager Schaeffler KG, Industriestraße 1-3
8522 Herzogenaurach
ANR 17 17 332


PG 2066


## Elastische Dichtung für eine Wälzlager-Drehverbindung

Die Erfindung betrifft eine elastische Dichtung für eine Wälzlager-Drehverbindung, welche aus zwei Laufringen und zwischen diesen abrollenden Wälzkörpern besteht, wobei der eine Laufring den anderen Laufring in axialer Richtung überragt, zwischen beiden Laufringen ein ringförmiger Spalt besteht, der eine Laufring in seiner den anderen Laufring überragenden und ihm zugewandten Mantelfläche eine umlaufende Nut aufweist, in die die Dichtung eingesetzt ist, welche eine Dichtlippe aufweist, die gleitend an dem anderen Laufring anliegt.

Solche Dichtungen sind bekannt, denn sie werden seit langem zur Abdichtung von Drehverbindungen eingesetzt. Eine ausreichende Lagerschmierung führt dabei zur Ausbildung eines Fettkragens um die Dichtlippe herum, was deren Dichtwirkung wesentlich erhöht. Bei Einbau des Lagers mit vertikaler Drehachse und guter Schmierung ist das Lager somit ausreichend gegen das Eindringen von Staub, Schmutz und Feuchtigkeit geschützt. Dagegen kann bei horizontaler Drehachse des Lagers und insbesondere bei zusätzlicher Nichteinhaltung der vorgeschriebenen Abschmierintervalle, aber auch bereits bei der Reinigung der Drehverbindung mit Druckwasser oder Dampfstrahl durchaus Feuchtigkeit in das Lager eindringen und großen Schaden verursachen.

Um dies zu verhindern werden bisher häufig zusätzlich zu den beiden einfachen Winkelringdichtungen zwei V-förmige Dichtungen verwendet, die zwischen den Laufringen in hierfür vorgesehene Aufnahmenuten eingesetzt werden. Diese Maßnahme sorgt für eine weitere Abdichtung gegen eindringende Fremdstoffe. Da aber zwei zusätzliche Nuten in der Laufringmantelfläche einen gewissen axialen Platzbedarf erfordern und zu einer Vergrößerung der axialen Bauhöhe des Lagers führen, ist ein solches Lager nicht für alle Einbaufälle verwendbar.

Die Erfindung hat sich die Aufgabe gestellt, eine elastische Dichtung für Wälzlager-Drehverbindungen zu schaffen, die einen zuverlässigen Schutz gegen das Eindringen von Feuchtigkeit und sonstigen Fremdstoffen bietet. Ferner sollen hierdurch die äußeren Lagerabmessungen nicht verändert werden, so daß mit der erfindungsgemäßen Dichtung versehene Wälzlager-Drehverbindungen auch in allen bisherigen Konstruktionen eingesetzt werden können.

Erfindungsgemäß wird diese Aufgabe dadurch gelöst, daß die Dichtung einen in den ringförmigen Spalt eingreifenden, axial gerichteten Kragen aufweist, der sich am einen Laufring abstützt und mit wenigstens einer Dichtlippe innerhalb des Spaltraumes gleitend an dem anderen Laufring anliegt. Der in den ringförmigen Spalt zwischen den Laufringen eingreifende, axial gerichtete Kragen sorgt mit seiner innerhalb des Spaltraumes gleitend an dem anderen Laufring anliegenden Dichtlippe für eine zusätzliche Abdichtung gegen das Eindringen von Feuchtigkeit von sonstigen Fremdstoffen. Dadurch, daß der dichtlippenversehene Kragen in den ohnehin bestehenden freien Raum des ringförmigen Spaltes eingreift, kann die Steigerung der Dichtwirkung ohne Vergrößerung der axialen Bauhöhe des Lagers erzielt werden. Dies ermöglicht den Einbau

PG 2066 — 3 — 0175953

·von erfindungsgemäß abgedichteten Wälzlager-Drehverbindungen auch in allen bisherigen Konstruktionen.

Um zu ermöglichen, daß beim Nachfetten des Lagers Schmierfett aus dem Lager in den von beiden Dichtlippen gebildeten Hohlraum eintritt, dieser mit Fett gefüllt und dadurch die Dichtwirkung erheblich gesteigert wird, kann die Dichtlippe des in den ringförmigen Spalt eingreifenden Kragens aus dem Spalt hinaus gerichtet sein. Gleichzeitig bewirkt diese Ausrichtung der Dichtlippe eine wirksame Barriere gegen eindringende Fremdstoffe.

Nach einer vorteilhaften Ausführungsform der Erfindung kann der in den ringförmigen Spalt eingreifende Kragen unter Vorspannung und mit seiner gesamten, dem einen Laufring zugewandten Fläche an dem einen Laufring anliegen. Diese Vorspannung kann beispielsweise dadurch erzeugt werden, daß der Kragen mit dem in die umlaufende Nut eingreifenden Dichtungsfuß im Ausgangszustand einen Winkel von weniger als 90 Grad bildet. Sie bewirkt, daß bei rechtwinklig in den Laufring eingedrehter Nut der Kragen nach Einbau der Dichtung fest an der Mantelfläche des Laufringes anliegt. Diese feste Anlage verhindert dann weitgehend, daß aus dem Lager austretendes Schmierfett sich zwischen Kragen und Mantelfläche des einen Laufringes einlagert und die Dichtung aus der Nut preßt.

Eine weitere Ausführungsform der Erfindung sieht vor, das Ende des in den ringförmigen Spalt eingreifenden Kragens mit einer spitzen Kante auszubilden, welche an dem einen Laufring anliegt. Aufgrund der spitzen Kante kann aus dem Lager austretendes Schmierfett in Richtung Dichtlippe abgeleitet werden, so daß dieses erst gar nicht zwischen Kragen und Mantelfläche des einen Laufringes eindringen und den festen Sitz der Dichtung lockern kann.

In den Zeichnungen ist eine erfindungsgemäße Dichtung im Teil-Längsschnitt dargestellt. Es zeigen:

Fig. 1 eine elastische Dichtung im eingebauten Zustand und

Fig. 2 eine elastische Dichtung im Ausgangszustand.

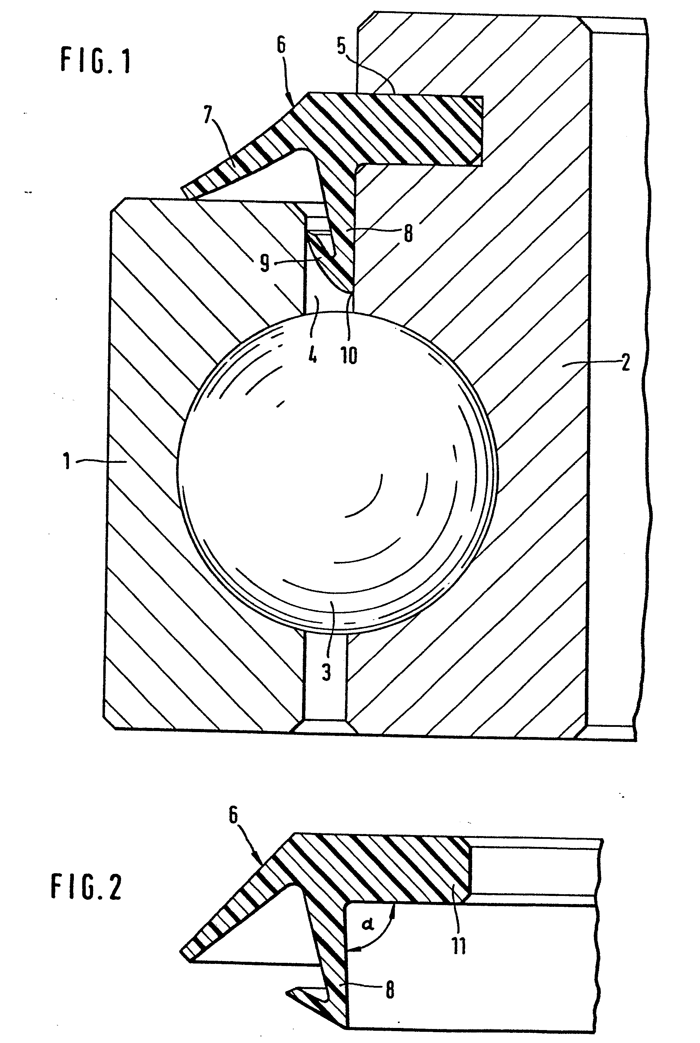

Figur 1 zeigt den äußeren Laufring 1 und den inneren Laufring 2 einer Wälzlager-Drehverbindung, zwischen denen Wälzkörper 3 abrollen und ein ringförmiger Spalt 4 besteht. Der innere Laufring 2 weist in seinem den äußeren Laufring 1 überragenden und ihm zugewandten Bereich eine umlaufende Nut 5 auf, in die die elastische Dichtung 6 eingesetzt ist. Eine Dichtlippe 7 der Dichtung 6 liegt an dem äußeren Laufring 1 gleitend an, eine weitere, aus dem ringförmigen Spalt 4 hinaus gerichtete Dichtlippe 9 geht von dem axial gerichteten Kragen 8 aus und liegt ebenfalls an dem äußeren Laufring 1 gleitend an. Der Kragen 8 ist an seinem Ende mit einer spitzen Kante 10 ausgebildet, die an der Außenmantelfläche des inneren Laufringes 2 anliegt.

Die Dichtlippe 9 des Kragens 8 bildet eine zusätzliche Barriere gegen eindringende Fremdstoffe. Die spitze Kante 10 des Kragens 8 verhindert, daß Schmierfett zwischen den Kragen 8 und den inneren Laufring 2 eindringt. Dieses kann dadurch, daß die Dichtlippe 9 aus dem ringförmigen Spalt 4 hinaus gerichtet ist, in den Hohlraum zwischen den beiden Dichtlippen 7, 9 eintreten.

In Figur 2 ist der Winkel $\alpha$ zwischen dem Kragen 8 und dem Dichtungsfuß 11 der elastischen Dichtung 6 im Ausgangszustand dargestellt, der hierbei weniger als 90 Grad beträgt.

PG 2066 — 5 — 

0175953

Diese Winkelstellung zwischen dem Kragen 8 und dem Dichtungsfuß 11 bewirkt, daß beim Einbau der Dichtung 6 der Kragen 8 unter Vorspannung an der äußeren Mantelfläche des inneren Laufringes 2 anliegt und ein Eindringen von Schmierfett zwischen dem Kragen 8 und dem inneren Laufring 2 vermieden werden kann.

0175953

INA Wälzlager Schaeffler KG, Industriestraße 1-3
8522 Herzogenaurach
ANR 17 17 332

PG 2066


Ansprüche
===

1. Elastische Dichtung für eine Wälzlager-Drehverbindung, welche aus zwei Laufringen und zwischen diesen abrollenden Wälzkörpern besteht, wobei der eine Laufring den anderen Laufring in axialer Richtung überragt, zwischen beiden Laufringen ein ringförmiger Spalt besteht, der eine Laufring in seiner den anderen Laufring überragenden und ihm zugewandten Mantelfläche eine umlaufende Nut aufweist, in die die Dichtung eingesetzt ist, welche eine Dichtlippe aufweist, die gleitend an dem anderen Laufring anliegt, dadurch gekennzeichnet, daß die Dichtung (6) einen in den ringförmigen Spalt (4) eingreifenden, axial gerichteten Kragen (8) aufweist, der sich am einen Laufring (2) abstützt und mit wenigstens einer Dichtlippe (9) innerhalb des Spaltraumes (4) gleitend an dem anderen Laufring (1) anliegt.

2. Elastische Dichtung nach Anspruch 1, dadurch gekennzeichnet, daß die Dichtlippe (9) des in den ringförmigen Spalt (4) eingreifenden Kragens (8) aus dem Spalt (4) hinaus gerichtet ist.

3. Elastische Dichtung nach Anspruch 1 oder 2, dadurch gekennzeichnet, daß der in den ringförmigen Spalt (4) eingreifende Kragen (8) unter Vorspannung und mit seiner

PG 2066          - 2 -

gesamten, dem einen Laufring (2) zugewandten Fläche an dem einen Laufring (2) anliegt.

4. Elastische Dichtung nach Anspruch 1, 2 oder 3, dadurch gekennzeichnet, daß das Ende des in den ringförmigen Spalt (4) eingreifenden Kragens (8) mit einer spitzen Kante (10) ausgebildet ist, welche an dem einen Laufring (2) anliegt.

FIG.1

'0175953

FIG.2